# EUROPEAN PATENT SPECIFICATION

(11) **EP 2 338 329 B1**
(45) Date of publication and mention of the grant of the patent: **20.07.2016**
(21) Application number: 10192064.3
(22) Date of filing: 22.11.2010
(51) Int. Cl.: A01N 25/02, A01N 25/22, A01N 35/02, A01P 1/00, A01N 35/08, A01N 37/34

(54) **Disinfectant formulations suitable for use at low temperature**
Desinfizierende Formulierungen zur Verwendung bei niedrigen Temperaturen
Formulations désinfectantes adaptées à l'utilisation à basse température

(30) Priority: 18.12.2009 EP 09425510
(43) Date of publication of application: 29.06.2011
(73) Proprietor: Dow Global Technologies LLC, Midland, MI 48674 (US); Dow Italia Divisione Commerciale S.r.l., 20151 Milano (IT)
(72) Inventor: Arzu, Antonio, 25037 Pontoglia (IT); Hughes, Stephanie, Lynn, Beaverton, MI 48612 (US); Bertheas, Ute, Helmine, 8805 Richterswil (CH); Keene, Philip, Alexander, 8810 Horgen (CH); Foley, Paul, Midland, MI 48642 (US); Lenoir, Pierre, Marie, 8805 Richterswil (CH)
(74) Representative: Hoggins, Mark Andrew

(56) References cited:
- EP-A2- 1 767 091
- WO-A1-94/16564
- WO-A1-98/19536
- WO-A2-2007/083164
- WO-A2-2007/096885
- WO-A2-2008/013784
- US-A- 4 761 427

## Description

### BACKGROUND:

It is often desired to use liquid formulations that contain biocides. In some situations, it is desired to use such liquid formulations at low temperature, and then it is desired that the liquid formulation remain pourable. That is, at the temperature at which it is desired to use the formulation, it is desirable that the formulation remain unfrozen and that the formulation has viscosity low enough to allow it to be poured or pumped from one container to another. In some cases, it is also desirable that the formulation have one or more of the following characteristics: chemical stability over a reasonable period of time, without undergoing undesirable chemical reactions such as, for example, degradation of the biocide; relatively high flash point; relatively low human toxicity; and relatively high concentration of biocide.

WO 98/19536 discloses disinfectant concentrates comprising glutaraldehyde and a solvent selected from triethylene glycol, diethylene glycol or tetraethylene glycol. US 5,496,858 discloses an aqueous disinfectant concentrate that contains an aldehyde, an alcohol with limited water miscibility, and preferably a nonionic surfactant. It is desired to provide formulations with improved low-temperature pourability.

### STATEMENT OF THE INVENTION:

In the present invention, there is provided a disinfectant composition comprising
(a) 15% to 40% biocide, by weight based on the weight of said composition, wherein said biocide comprises glutaraldehyde;
(b) 15% to 40% water, by weight based on the weight of said composition; and
(c) 20% to 70% solvent, by weight based on the weight of said composition;
wherein said solvent comprises one or more glycol ether having the structure (I)

R¹-O-Zₙ-R² (I)

wherein n is equal to or greater than 1; wherein n is less than 6; wherein R¹ and R² are independently H or C₁ to C₄ alkyl; wherein, if n is 1, then at least one of R¹ and R² is not H; wherein each said unit -Z- is 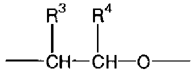
wherein, within each -Z- unit, R³ and R⁴ are each independently hydrogen or methyl; wherein, within each -Z- unit, R³ and R⁴ are not both methyl;
wherein the ratio of the weight of all the -Z- units in said solvent in which both of R³ and R⁴ are hydrogen to the weight of all the -Z- units in said solvent in which one of R³ and R⁴ is methyl is 0.66:1 or lower; and
wherein said solvent comprises one or more glycol ether (A), wherein each molecule of said glycol ether (A) has said structure (I) wherein, independently within each -Z- unit, one of R³ and R⁴ is hydrogen and the other of R³ and R⁴ is methyl.

### DETAILED DESCRIPTION:

As used herein, "alkyl" is a saturated hydrocarbon, which may be linear, branched, cyclic, or a combination thereof.

As used herein, "flash point" is the flash point as measured as follows. Flash points between 25°C and 70°C are measured by the Abel-Pensky closed flash point tester according to DIN 51755, and flash points above 70°C are measured by the open cup Cleveland method. As used herein, the phrase "a ratio of X: 1 or less" means a ratio that has the value of Y:1, where Y is less than or equal to X. The case where Y is zero is included unless stated otherwise.

The term "microbicide", "biocide", "preservative" or "antimicrobial compound" refers herein to a compound useful for killing, inhibiting the growth of, or controlling the growth of microorganisms. Biocides include bactericides, fungicides and algicides. The term "microorganism" includes, for example, fungi (such as yeast and mold), bacteria, and algae.

As used herein, a "glycol ether" is a compound with structure (I):

R¹-O-Zₙ-R² (I)

where n is equal to or greater than 1; n is less than 6; R¹ and R² are independently H or C₁ to C₄ alkyl; if n is 1, then at least one of R¹ and R² is not H; each unit -Z- is 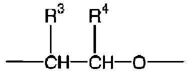 where, independently within each -Z- unit, independently hydrogen or methyl; and within each -Z- unit, R³ and R⁴ are not both methyl.

As used herein, a "Z1" unit is a -Z- unit in which R³ and R⁴ are both hydrogen, and a "Z2" unit is a -Z- unit in which either R³ or R⁴ is methyl.
As used herein, "ppm" means parts per million by weight.

As used herein, when it is stated that the composition of the present invention contains "little or no" of some ingredient, it is meant that either there is none of that ingredient in the composition or, if some of that ingredient is present, the amount of that ingredient is 100 ppm or less, based on the weight of the composition.

The composition of the present invention contains one or more biocide including glutaraldehyde. Some suitable biocides include, for example, aldehydes, bromo-nitro compounds, and isothiazolones. Some suitable bromo-nitro compounds include, for example, dibromonitrilopropionamide ("DBNPA") and 2-bromo-2-nitropropane-1,3-diol ("bronopol").

In some embodiments, no compound in the composition is a biocide other than glutaraldehyde.

In some embodiments, the composition of the present invention includes one or more biocide including glutaraldehyde and also includes one or more biocide that is not an aldehyde. Suitable biocides that are not aldehydes include, for example, DBNPA, bronopol, quaternary ammonium biocides (including, for example, alkyl dimethyl benzyl ammonium chlorides, dialkyl dimethyl ammonium chlorides, tetrakishydroxymethyl phosphonium sulfate, tributyl tetradecyl phosphonium chloride, and other quaternary biocides), other biocides that are compatible with aldehyde biocides, and mixtures thereof.

Mixtures of suitable biocides are also suitable.

The amount of biocide in the composition of the present invention is 15% to 40% by weight, based on the weight of the composition. The amount of biocide is preferably 30% or less, by weight based on the weight of the composition.

The composition of the present invention contains one or more solvent. As used herein, a solvent is a compound that is not water and that is liquid at 25°C and one atmosphere pressure. Some suitable solvents contain one or more oxygen atoms per molecule.

The solvent in the composition of the present invention contains one or more glycol ether (A), wherein each molecule of said glycol ether (A) has said structure (I) wherein, independently within each -Z- unit, one of R³ and R⁴ is hydrogen and the other of R³ and R⁴ is methyl. The glycol ether may contain molecules in which each -Z- unit is a Z1 unit; molecules in which each -Z- unit is a Z2 unit; molecules that contain both one or more Z1 unit and one or more Z2 unit; and mixtures thereof. When the solvent as a whole is examined, the ratio of the weight of all Z1 units to the weight of all Z2 units is 0.66:1 or lower.

In some embodiments, the solvent in the composition of the present invention contains one or more glycol ether (herein called "GEA") that has structure (I) in which, within each -Z- unit, R³ and R⁴ are not both hydrogen. In some GEAs, every -Z- unit is the same as every other -Z- unit in that molecule. In some GEAs, one or more -Z- unit has R³ that is methyl and one or more -Z- unit has R⁴ that is methyl.

In some embodiments, one or more GEA is used in which n is 2 or greater. In some embodiments, one or more GEA is used in which n is 2 or 3. In some embodiments, every GEA in the composition of the present invention has n of 2 or 3. In some embodiments, one or more GEA is used in which n is 2. In some embodiments, every GEA in the composition of the present invention has n of 2.

Some suitable GEAs include, for example, dipropylene glycol, dipropylene glycol monomethyl ether, propylene glycol methyl ether, tripropylene glycol monomethyl ether, propylene glycol n-propyl ether, dipropylene glycol n-propyl ether, dipropylene glycol n-butyl ether, propylene glycol n-butyl ether, dipropylene glycol dimethyl ether, and mixtures thereof.

In some embodiments, the solvent of the composition of the present invention contains one or more GEA in which n is 2 or 3 and also contains one or more GEA in which n is 1. In some of such embodiments, the solvent contains dipropylene glycol monomethyl ether and propylene glycol methyl ether.

In some embodiments, every glycol ether in the composition is a GEA. In other embodiments, the solvent contains one or more glycol ether that is not a GEA. In some embodiments, for example, in addition to one or more GEA, the solvent also contains one or more "GEB," which is defined herein as a glycol ether of structure (I) in which, in every structure -Z-, both R³ and R⁴ are hydrogen. Some suitable GEBs include, for example, diethylene glycol, triethylene glycol, diglymes, and mixtures thereof. Diglymes are diethylene glycol dialkyl ethers, where the alkyl groups have 1 to 4 carbon atoms.

In some embodiments in which a GEB is present, the ratio of the sum of the weights of all GEB compounds to the sum of the weights of all GEA compounds is 0.66:1 or lower.

It is considered herein that GEA compounds generally have lower human toxicity than GEB compounds.

In some embodiments, one or more glycol ether is used that is a "GEAB," which is defined herein as a glycol ether having structure (I), where at least one -Z-unit is a Z1 unit and, in the same molecule, at least one -Z- unit is a Z2 unit. In some embodiments in which a GEAB is used, the ratio of the weight of Z1 units within the molecule of that GEAB to the weight of all Z2 units within the same molecule is 0.66:1 or lower.

Mixtures of suitable glycol ethers are suitable.

In some embodiments, one or more glycol ether is used that is water soluble. As used herein, a compound is water soluble if the amount of that compound that can be dissolved in 100 g of water at 25°C is 5 g or more. In some embodiments, one or more glycol ether is used that is highly water soluble. As used herein, a compound is highly water soluble if the amount of that compound that can be dissolved in 100 g of water at 25°C is 50 g or more. In some embodiments, one or more highly water soluble glycol ether is used that is miscible with water in all proportions. In some embodiments, the entire solvent that is used is soluble in water. In some embodiments, each ingredient in the solvent is water soluble. In some embodiments, the entire solvent that is used is highly soluble in water. In some embodiments, each ingredient in the solvent is highly water soluble.

The amount of solvent in the composition of the present invention is 20% to 70% by weight, based on the weight of the composition. In some embodiments, the amount of solvent is, by weight, based on the weight of the composition, 35% or more; or 45% or more. Independently, in some embodiments, the amount of solvent is, by weight, based on the weight of the composition, 65% or less.

As used herein, a low diol is compound with structure (III): 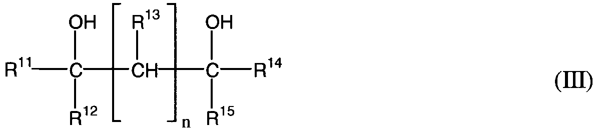 where n is 0, 1, or 2; each of R¹¹, R¹², R¹³, R¹⁴, R¹⁵ is independently hydrogen or any monovalent group. If n is 2, the two R¹³ groups may be the same or different. A compound is considered herein to be a low diol if it has structure (III), regardless of the nature of R¹¹, R¹², R¹³, R¹⁴, and R¹⁵. As used herein, an alkyl low diol is a low diol in which each of R¹¹, R¹², R¹³, R¹⁴, R¹⁵ is independently hydrogen or any monovalent alkyl group.

In some embodiments, the composition of the present invention contains little or no alkyl low diol. In some embodiments, the composition of the present invention contains no alkyl low diol. In some embodiments, the composition of the present invention contains little or no low diol. In some embodiments, the composition of the present invention contains no low diol.

In some embodiments, the composition of the present invention contains no surfactant. In other embodiments, the composition of the present invention contains one or more surfactant. Suitable surfactants may be nonionic, anionic, cationic, amphoteric, or a mixture thereof.

In some embodiments, the composition of the present invention contains little or no buffer. In some embodiments, the composition of the present invention contains no buffer.

Independently, in some embodiments, the composition of the present invention contains little or no organic lithium salts. In some embodiments, the composition of the present invention contains no organic lithium salts.

In some embodiments, the flash point of the composition of the present invention is equal to or higher than the flash point of acetone. Independently, in some embodiments, the flash point of the composition of the present invention is 55°C or higher.

In some embodiments, each ingredient in the solvent of the composition of the present invention has flash point of 55°C or higher.

In some other embodiments, one or more ingredient in the solvent of the present invention has flash point of below 55°C. In such embodiments, when it is desired that the composition of the present invention have flash point of 55°C or higher, it is contemplated that the properties and the amount of each ingredient with flash point below 55°C are chosen so that the complete composition of the present invention will have flash point of 55°C or higher. Some suitable ingredients with flash points of below 55°C are, for example, C₁ to C₃ alkyl alcohols, such as, for example, isopropanol. Other examples are, for example, glycols or glycol ethers with flash points below 55°C, including, for example, propylene glycol methyl ether.

In some embodiments, no isopropanol is used. In some embodiments, no alcohol having flash point below 55°C is used. In some embodiments, no alcohol is used.

In some embodiments, the composition of the present invention contains one or more soluble salt. As used herein a salt is considered soluble if 2 grams or more of that salt can be dissolved at 25°C in 100 grams of a test composition made of equal parts by weight of biocide and water. The biocide for the test composition is chosen to be the same as the biocide that will be used in the disinfectant composition. For some suitable soluble salts, 10 grams of more of that salt can be dissolved in the test composition.

Suitable soluble salts include, for example, soluble salts that have cation of alkali metal or alkaline earth. In some embodiments, one or more soluble salt is used that has cation of sodium, potassium, magnesium, or calcium.

Suitable soluble salts include, for example, soluble salts that have anion of halide, acetate, or nitrate. In some embodiments, one or more soluble salt is used that has anion of chloride or acetate.

In embodiments in which one or more soluble salt is used, the soluble salt or salts may be mixed with the other ingredients of the composition by any method. When the soluble salt is first mixed with one or more of the other ingredients of the composition, the form of the salt immediately prior to that mixing is herein called the form in which the salt is added to the composition.

In some embodiments, one or more soluble salt is added to the composition in the form of a hydrated salt. In some embodiments, one or more soluble salt is added to the composition in the form of an anhydrous salt. In some embodiments, every soluble salt that is added to the composition is added in the form of an anhydrous salt.

Mixtures of suitable soluble salts are also suitable.

Among embodiments of the present invention in which one or more soluble salt is present, the amount of soluble salt is chosen so that the ratio of the weight of all soluble salt to the weight of all solvent is from 0.01:1 to 10:1. In some embodiments, the ratio of the weight of all soluble salt to the weight of all solvent is 0.1:1 or higher, preferably 0.2:1 or higher. Independently, in some embodiments, the ratio of the weight of all soluble salt to the weight of all solvent is 3:1 or lower, preferably 1:1 or lower.

In some embodiments, the sum of the weight of all soluble salt plus the weight of all solvent will be 21% to 69% by weight, based on the weight of the composition.

In some embodiments, there is little or no salt in the composition of the present invention that is not a soluble salt. In some embodiments, every salt that is present in the composition of the present invention is a soluble salt. In some embodiments, little or no soluble salt is present in the composition.

The compositions of the present invention may be used in a variety of ways for a variety of purposes. For example, the composition of the present invention may be stored and used as a concentrate that may be added to water to provide the water solution with biocidal properties. Water with biocidal properties is useful, for example, in situations in which the water is in contact with metal (as in, for example pipes or tanks), because without biocidal properties, the water may encourage microbially induced corrosion in the metal. For example the removal of oil from under ground is sometimes enhanced by a waterflood, and the pipes, tanks, etc. that handle the water is prone to microbially induced corrosion. Many oilfields are in locations where the winter temperatures are relatively low. Despite the low temperatures, it is desirable to store the biocide concentrate outdoors and then pour it into a larger container, and to do some or all of these operations outdoors at relatively low temperatures.

### EXAMPLES

In the following Examples these abbreviations are used:

| | |
|---|---|
| Ucarcide™ 50 antimicrobial | 50% GA and 50% water by weight, based on the weight of Ucarcide™ 50 biocide |
| Ucarcide™ 42 antimicrobial | 42.5% GA, 7.5% alkyl dimethyl benzyl ammonium chloride and 58% water by weight, based on the weight of Ucarcide™ 42 biocide |
| anhy | anhydrous form of a salt |
| BDGA | Dowanol™ BDGA solvent (butyl diethylene glycol acetate) |
| DE | Dowanol™ DE solvent (diethylene glycol monoethyl ether) |
| DEG | diethylene glycol |
| Diglyme | diethylene glycol dimethyl ether |
| DM | DowanolTM DM solvent (diethylene glycol monomethyl ether) |
| DMM | Proglyde™ DMM solvent (dipropylene glycol dimethyl ether) |
| DPG | dipropylene glycol |
| DPM | DowanolTM DPM solvent (dipropylene glycol monomethyl ether) |
| EPh | DowanolTM EPh solvent (ethylene glycol phenyl ether) |
| GA | glutaraldehyde |
| i-PrOH | isopropanol |
| KOAc | potassium acetate |
| MPEG350 | methyl ether of HO-(CH₂CH₂O)7-H |
| PG | propylene glycol |
| PGDA | Dowanol™ PGDA solvent (propylene glycol diacetate) |
| PM | Dowanol™ PM solvent (propylene glycol methyl ether) |
| PnB | Dowanol™ PnB solvent (propylene glycol n-butyl ether) |
| PnP | Dowanol™ Pnp solvent (propylene glycol n-propyl ether) |
| TMG | Dowanol™ TM solvent (trimethylene glycol) |

### Comparative Examples C1-C8

The following comparative example compositions were made as shown in Table 1A. The amounts shown are parts by weight. "Calc%GA" is the calculated weight percent of GA based on the total weight of the composition.

**Table 1A: Comparative Examples C1-C8**

| Ingredient | C1 | C2 | C3 | C4 | C5 | C6 | C7 | C8 |
|---|---|---|---|---|---|---|---|---|
| PG | | 40 | 38 | | 60 | | | |
| TMG | 40 | | | 60 | | | | |
| acetone | | | 62 | | | | | 40 |
| Ucarcide™ 50 biocide | 60 | 60 | | 40 | 40 | 48 | | |
| GA | | | | | | | 50 | 30 |
| water | | | | | | 52 | 50 | 30 |
| total | 100 | 100 | 100 | 100 | 100 | 100 | 100 | 100 |
| Calc%GA | 30 | 30 | 31 | 20 | 20 | 24 | 50 | 30 |

**Table 1B: viscosity of Comparative Examples C1-C8:**

| | C1 | C2 | C3 | C4 | C5 | C6 | C7 | C8 |
|---|---|---|---|---|---|---|---|---|
| viscosity⁽²⁾ | | | | | | | | |
| 40°C | 4.8 | 3.7 | -⁽³⁾ | 8.1 | 5.4 | 1.4 | 5.2 | 1.5 |
| 20°C | 11.4 | 8.2 | -⁽³⁾ | 18.7 | 13.7 | 2.9 | 18.7 | 2.9 |
| 0°C | 31.0 | 22.1 | -⁽³⁾ | 53.0 | 40.7 | 6.3 | 82.1 | 6.6 |
| -25°C | 175. | 135.2 | -⁽³⁾ | 345.7 | 307.9 | fr⁽⁵⁾ | fr⁽⁵⁾ | 26.9 |
| -35°C | 417.3 | 357.8 | -⁽³⁾ | nm⁽⁴⁾ | 950.1 | -⁽³⁾ | -⁽³⁾ | 60.85 |
| -42°C | 919.2 | 795.2 | -⁽³⁾ | -⁽³⁾ | nm⁽⁴⁾ | -⁽³⁾ | -⁽³⁾ | nm⁽⁴⁾ |

| | | | | | | | | |
|---|---|---|---|---|---|---|---|---|
| Note (2): kinematic viscosity, mm²/s, measured using an Anton Paar Stabinger viscometer model SVM 3000. Note (3): test was not performed Note (4): not measurable with K=25.9 Note (5): frozen | | | | | | | | |

**Table 1C: measured %GA in Comparative Examples C1-C8:**

| | C1 | C2 | C3 | C4 | C5 | C6 | C7 | C8 |
|---|---|---|---|---|---|---|---|---|
| %GA⁽⁶⁾ | | | | | | | | |
| initial | -⁽³⁾ | 31.0 | 32.0 | -⁽³⁾ | -⁽³⁾ | -⁽³⁾ | -⁽³⁾ | -⁽³⁾ |
| after 1 day at 23°C | 29.4 | 27.5 | -⁽³⁾ | 21.8 | 21.9 | -⁽³⁾ | -⁽³⁾ | -⁽³⁾ |
| after 7 day at 23°C | 27.6 | 26.0 | 28.4 | 21.0 | 20.1 | 21.4 | 51.5⁽⁷⁾ | 32.5 |
| after 7 days at 40°C | -⁽³⁾ | 9.9 | 11.4 | -⁽³⁾ | -⁽³⁾ | 20.9 | 46.1 | -⁽³⁾ |

| | | | | | | | | |
|---|---|---|---|---|---|---|---|---|
| Note (6): weight percent GA, based on the weight of the composition, measured by gas chromatography. Note (7): average of two duplicate measurements | | | | | | | | |

Each of the comparative examples suffered from one or more of the following drawbacks: unacceptable degradation of GA during storage; low-temperature viscosity that is too high; flash point that is too high; or relatively high level of human toxicity (due to high proportion of solvent that is a GEB).

### Comparative Examples C9, C10, and C12; and Working Examples 11 and 13

The following compositions were made. The appearances of the compositions were observed. Some compositions were clear, demonstrating that all ingredients of that composition are soluble in that composition. Percentages are by weight, based on the weight of that composition.

**Table 2A: Compositions and Phase Behavior**

| Ingredient | C9 | C10 | 11 | C12 | 13 |
|---|---|---|---|---|---|
| Ucarcide™ 50 biocide | 100 | 70 | 70 | 70 | 70 |
| Solvent, 30% | none | BDGA | DPM | PGDA | DMM |
| calculated % GA | 50 | 35 | 35 | 35 | 35 |
| Appearance | clear | clear | clear | clear | clear |

The measured weight % GA was tested by gas chromatography, as follows (no tests were performed on Comparative Example C 14).

**Table 2B: % GA**

| measured % GA | C9 | C10 | 11 | C12 | 13 |
|---|---|---|---|---|---|
| after 12 days at 23°C | 50.8 | 34.9 | 35.1 | 35.7 | 35.7 |
| after 9 days at 40°C | 50.8 | 35.4 | 34.9 | 35.3 | 35.7 |
| after 68 days at 40°C | 50.1 | 32.2 | 34.1 | 35.1 | 34.0 |

Other characteristics were also observed. The highest temperature at which visible solids formed was recorded. The highest temperature at which the sample could not be conveniently poured was recorded as the "Dow pour point." Kinematic viscosity was measured as in Example 1. Dynamic viscosity was measured with the same instrument as the Kinematic viscosity, reported in milliPascal*seconds (mPa*s), which is equivalent to centipoise.

**Table 2C: Further Characteristics**

| | C9 | C10 | 11 | C12 | 13 |
|---|---|---|---|---|---|
| solids formation | -23°C | -26°C | -51°C | -23°C | -51°C |
| Dow pour point | | | -47°C | | -47°C |
| kinematic viscosity at -20°C, mm²/s | | | 1000.2 | | 461.5 |
| dynamic viscosity at -30°C, at 10 rpm, mPa*s | | | 5000 | | 900 |
| dynamic viscosity at -40°C, at 10 rpm, mPa*s | | | 8000 | | 4000 |

The Comparative Examples C9, C10, and C 12 all formed solids at temperatures well above -40°C, whereas Examples 11 and 13 remained fluid at -40°C.

### Examples 16-24

Formulations were made and tested as shown below. Amounts are weight percent based on the weight of the composition. Flash point was measured using Abel-Pensky closed flash point tester according to DIN 51755. Starting temperature was 25°C; sample was not stirred; temperature rise was 1°C per minute; starting at 30°C, sample was tested every 1°C. Flash points above 70°C were measured using an open cup Cleveland.

**Table 3A: Formulations and Flash Points of Examples 16-24**

| | Example Number | | | | | | | | |
|---|---|---|---|---|---|---|---|---|---|
| Ingredient | 16 | 17 | 18 | 19 | 20 | 21 | 22 | 23 | 24 |
| Ucarcide™ 50 biocide (%) | 48 | 48 | 48 | 48 | 48 | 48 | 48 | 48 | 48 |
| PM (%) | 15 | 12.5 | 10 | 7.5 | 5 | 42 | 32 | 0 | 52 |
| DPM (%) | 37 | 39.5 | 42 | 44.5 | 47 | 10 | 20 | 52 | 0 |
| flash point | hi⁽⁸⁾ | hi⁽⁸⁾ | hi⁽⁸⁾ | hi⁽⁸⁾ | hi⁽⁸⁾ | 55°C | 57°C | hi⁽⁸⁾ | 50°C |

| | | | | | | | | | |
|---|---|---|---|---|---|---|---|---|---|
| Note (8): higher than 99°C. | | | | | | | | | |

Viscosity was measured using Brookfield Viscometer model DV-II, spindle number 1, at room temperature (between 18 and 22°C). Rotation speed was 6 or 12 revolutions per minute, chosen to keep the torque reading near the middle of the range. The spindle and the sample were cooled to the measurement temperature. Results were as follows, reported in millipascal*seconds (mPa*s).

**Table 3B: viscosity measurement**

| | Brookfield Viscosity (mPa*s) | | | | | |
|---|---|---|---|---|---|---|
| Example No. | 10°C | 0°C | -10°C | -20°C | -30°C | -40°C |
| 21 | 20 | 39 | 84 | 218 | 378 | 1548 |
| 22 | 25 | 55 | 108 | 284 | 613 | 2172 |
| 23 | 36 | 117 | 117 | 344 | 1750 | 2995 |
| 24 | 19 | 55 | 120 | 245 | 350 | 1250 |

### Examples 25-36

Each composition was prepared as a 10 gram sample and placed in a small container overnight in a freezer at -28°C to -30°C. Then each sample was turned upside down to observe the flow. Each flow was rated as follows: frozen (solid); too slow (appears to be liquid but flows to slowly to be of practical use); acceptable (flows reasonably quickly); quick (flows faster that "acceptable"). Percentages are by weight based on the weight of the composition. "Ex" means Example; comparative examples have an example number beginning with "C."

**Table 4: Visual Flow Tests**

| Ex | Ucarcide™ 50 biocide % | Solvent 1 | Solvent 1 % | Solvent 2 | Solvent 2% | flow |
|---|---|---|---|---|---|---|
| 25 | 48 | DPM | 52 | | | acceptable |
| 26 | 48 | PnB | 52 | | | frozen |
| 27 | 48 | PnP | 52 | | | frozen |
| 28 | 48 | PM | 25 | PnP | 26 | quick |
| C29 | 66.66 | MPEG350 | 33.33 | | | too slow |
| 30 | 48 | PM | 28 | MPEG350 | 24 | too slow |
| 31 | 48 | PM | 42 | DPM | 10 | acceptable |
| C32 | 48 | DE | 52 | | | too slow |
| C33 | 48 | DM | 52 | | | quick |
| 34 | 40 | PM | 42 | DPM | 18 | quick |
| 35 | 40 | PM | 42 | DM | 18 | quick |
| 36 | 40 | PM | 42 | MPEG350 | 18 | too slow |

### Examples 37-43

Formulations were prepared and tested as follows. Each of the compositions shown in Table 5 below was mixed and placed into a 1.2 milliliter tube and shaken. Approximately 1 milligram of copper sulfide powder was added as a nucleating agent. Samples were held at -50°C for at least 24 hours. The samples were then observed visually to detect phase separation. Five replicate samples were made and tested for each formulation shown. The samples shown in the table below were stable; that is, each sample showed no phase separation.

Percentages are by weight, based on the weight of the formulation.

**Table 5: Formulations Stable at -50°C**

| Example | Additive 1 | Additive 2 | ratio⁽⁹⁾ | Additive %⁽¹⁰⁾ | % of Ucarcide™ 42 |
|---|---|---|---|---|---|
| 37 | CaCl₂ anhy | DPM | 0.47:1 | 34.5 | 65.5 |
| 38 | CaCl₂ anhy | DPM | 0.24:1 | 39.4 | 60.6 |
| 39 | CaCl₂6H₂O | DPM | 0.36:1 | 44.8 | 55.2 |
| 40 | PM | none | -- | 45.0 | 55.0 |
| 41 | CaCL₂6H₂O | DPM | 0.72:1 | 48.7 | 51.3 |
| 42 | DMM | none | -- | 54.9 | 45.1 |
| 43 | DPM | none | -- | 57.3 | 42.7 |

| | | | | | |
|---|---|---|---|---|---|
| Note (9): weight ratio of Additive 1 to Additive 2. Note (10): The amount of the sum of Additive 1 plus Additive 1, by weight, based on the weight of the formulation. | | | | | |

### Examples 44-54

Samples were made and tested as in Examples 37-43 except that the test temperature was -45°C and that, instead of Ucarcide^{™} 42 antimicrobial, a mixture of equal parts by weight of glutaraldehyde and water (called "Glut50" in Table 6 below) was used. The formulations listed were all stable at -45°C.

**Table 6: Formulations Stable at -45°C**

| Example | Additive 1 | Additive 2 | ratio⁽⁹⁾ | Additive %⁽¹⁰⁾ | % of Glut50 |
|---|---|---|---|---|---|
| 44 | CaCl₂ anhy | DMM | 0.49:1 | 33.7 | 66.3 |
| 45 | CaCl₂ anhy | DPM | 0.47:1 | 34.7 | 65.4 |
| 46 | PM | -- | -- | 38.6 | 61.4 |
| 47 | CaCl₂ anhy | DMM | 0.24:1 | 38.6 | 61.4 |
| 48 | CaCl₂ anhy | DPM | 0.24:1 | 40.0 | 60.0 |
| 49 | CaCl₂ 6H₂O | DMM | 0.75:1 | 40.6 | 59.4 |
| 50 | CaCl₂ 6H₂O | DPM | 0.72:1 | 41.9 | 58.1 |
| 51 | CaCl₂ 6H₂O | DMM | 0.38:1 | 43.5 | 56.5 |
| 52 | CaCl₂ 6H₂O | DPM | 0.36:1 | 45.0 | 55.0 |
| 53 | DMM | -- | -- | 48.3 | 51.7 |
| 54 | DPM | -- | -- | 50.5 | 49.5 |

### Examples 55-56, C57-C58, and 59-71

Samples were mixed and then cooled to -50°C. Samples that remained clear were labeled "pass," which those that showed phase separation were labeled "fail." Viscosity of the "pass" samples was assessed by a ball drop test. Using identical vials, a 7 gram sample of each formulation was placed in a vial, a metal ball of 2.8 mm diameter was placed on the surface, and the time for the ball to reach the bottom of the sample was recorded. The diameter of the vial was large compared to the diameter of the ball. "Glut50" has the same meaning as in Examples 44-54 above. Percent is by weight, based on the weight of the formulation. Comparative Examples have an example number that starts with "C." Results were as follows.

**Table 7: Freeze Stability and Viscosity at -50°C**

| Example No. | %of Glut50 | % of DPM | Additive Type | %of Additive | Stability | Drop Time (min) |
|---|---|---|---|---|---|---|
| 55 | 50.2 | 37.4 | PnP | 12.5 | fail | |
| 56 | 50.0 | 25.1 | PnP | 25.0 | fail | |
| C57 | 49.8 | 37.6 | i-PrOH | 12.7 | fail | |
| C58 | 49.9 | 25.1 | i-PrOH | 25.0 | fail | |
| 59 | 49.9 | 37.5 | EPh | 12.6 | fail | |
| 60 | 49.9 | 25.0 | EPh | 25.0 | fail | |
| 61 | 50.0 | 25.0 | DMM | 25.0 | pass | 0.13 |
| 62 | 44.3 | 33.3 | PM | 22.4 | pass | 0.45 |
| 63 | 50.0 | 37.5 | DMM | 12.5 | pass | 0.55 |
| 64 | 57.1 | 28.4 | PM | 14.4 | pass | 1.19 |
| 65 | 50.0 | 50.0 | -- | 0 | pass | 2.03 |
| 66 | 50.0 | 37.5 | DPG | 12.5 | pass | 3.28 |
| 67 | 56.2 | 42.1 | MgCl₂ anhy | 1.7 | pass | 5.09 |
| 68 | 49.9 | 25.0 | DPG | 25.1 | pass | 7.58 |
| 69 | 64.1 | 32.0 | MgCl₂ anhy | 3.8 | pass | 11 |
| 70 | 50.0 | 37.4 | PM | 12.5 | pass | 0.53 |
| 71 | 50.0 | 25.0 | PM | 24.9 | pass | 0.29 |

### Comparative Examples C72-C76

Examples were made and tested as Examples and Comparative Examples 55-71.

**Table 8: Freeze Stability and Viscosity at -50°C**

| Example No. | % of Glut50 | % of diglyme | Additive Type | % of Additive | Stability | Drop Time min |
|---|---|---|---|---|---|---|
| C72 | 50.0 | 50.0 | | 0 | pass | 0.0 |
| C73 | 64.1 | 32.1 | MgCl₂ anhy | 3.9 | pass | 1.6 |
| C74 | 56.2 | 42.1 | MgCl₂ anhy | 1.7 | pass | 0.4 |
| C75 | 62.8 | 31.5 | KOAc | 5.7 | pass | 1.4 |
| C76 | 55.7 | 41.8 | KOAc | 2.5 | pass | 0.3 |
| C76A | 50.0 | 47.5 | KOAc | 2.5 | pass | |

### Examples 72-76

Examples were made and tested as Examples and Comparative Examples 55-71.

**Table 9: Freeze Stability and Viscosity at -50°C**

| Example No. | % of Glut50 | % of DMM | Additive Type | % of Additive | Stability | Drop Time min |
|---|---|---|---|---|---|---|
| 77 | 50.1 | 49.9 | -- | 0 | pass | 0.1 |
| 78 | 63.0 | 31.4 | KOAc | 5.7 | pass | 0.3 |
| 79 | 55.7 | 41.8 | KOAc | 2.5 | pass | 0.1 |
| 80 | 64.1 | 32.0 | MgCl₂ anhy | 3.9 | pass | 4.0 |
| 81 | 56.2 | 42.1 | MgCl₂ anhy | 1.7 | pass | 0.2 |

### Examples 65, C72, C76, 80, and C82: Steady-Shear Viscosity Testing

Samples were tested for steady-shear viscosity at -50°C using an Ares Rheometer with cone and cup geometry. The viscosity showed little or no dependence on shear rate in the range of 10 sec to 100sec⁻¹, and the viscosity
reported below is the average viscosity over that range of shear rates. Viscosity is reported in Pascal*seconds (Pa*s), which is equivalent to 1,000 centipoise.

Comparative Example C82 is 50% by weight of a solution of equal parts by weight of glutaraldehyde and water; 43% by weight of diglyme; and 7% by weight isopropyl alcohol.

**Table 10: Steady-Shear Viscosity Test Results**

| Example No. | Temperature | Viscosity (Pa*s) |
|---|---|---|
| 65 | -50°C | 200 |
| C72 | -50°C | 4 |
| 80 | -50°C | 200 |
| 65 | -40°C | 14.2 |
| C72 | -40°C | 0.5 |
| C76A | -40°C | 0.89 |
| C82 | -40°C | 0.43 |

## Claims

1. A disinfectant composition comprising
(a) 15% to 40% biocide, by weight based on the weight of said composition, wherein said biocide comprises glutaraldehyde;
(b) 15% to 40% water, by weight based on the weight of said composition; and
(c) 20% to 70% solvent, by weight based on the weight of said composition; wherein said solvent comprises one or more glycol ether having the structure (I):
R¹-O-Zₙ-R² (I)
wherein n is equal to or greater than 1; wherein n is less than 6; wherein R¹ and R² are independently H or C₁ to C₄ alkyl; wherein, if n is 1, then at least one of R¹ and R² is not H; wherein each said unit -Z- is 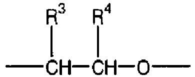
wherein, within each -Z- unit, R³ and R⁴ are each independently hydrogen or methyl;
wherein, within each -Z- unit, R³ and R⁴ are not both methyl;
wherein the ratio of the weight of all the -Z- units in said solvent in which both of R³ and R⁴ are hydrogen to the weight of all the -Z- units in said solvent in which one of R³ and R⁴ is methyl is 0.66:1 or lower; and
wherein said solvent comprises one or more glycol ether (A), wherein each molecule of said glycol ether (A) has said structure (I) wherein, independently within each -Z-unit, one of R³ and R⁴ is hydrogen and the other of R³ and R⁴ is methyl.

2. The composition of claim 1, wherein said solvent comprises
(a) one or more glycol ether (A) wherein n is 2 or more, and
(b) one or more glycol ether (A) wherein n is 1.

3. The composition of claim 2, wherein said (b) is propylene glycol methyl ether.

4. The composition of claim 1, wherein said solvent additionally comprises one or more glycol ether (B) having structure (II): 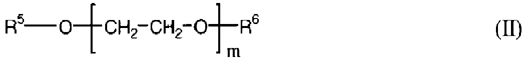
wherein m is equal to or greater than 1; wherein m is less than 6; wherein R⁵ and R⁶ are independently H or C₁ to C₄ alkyl; wherein, if m is 1, then at least one of R⁵ and R⁶ is not H;, and
wherein the ratio of the sum of the weights of all glycol ethers (B) to the sum of the weights of all glycol ethers (A) is 0.66:1 or less.

## Patentansprüche

1. Eine Desinfektionsmittelzusammensetzung, die Folgendes beinhaltet:
(a) zu 15 Gew.-% bis 40 Gew.-% Biozid, bezogen auf das Gewicht der Zusammensetzung, wobei das Biozid Glutaraldehyd beinhaltet;
(b) zu 15 Gew.-% bis 40 Gew.-% Wasser, bezogen auf das Gewicht der Zusammensetzung; und
(c) zu 20 Gew.-% bis 70 Gew.-% Lösungsmittel, bezogen auf das Gewicht der Zusammensetzung;
wobei das Lösungsmittel einen oder mehrere Glykolether mit der folgenden Struktur (I) beinhaltet:
R¹-O-Zₙ-R² (I)
wobei n gleich oder größer als 1 ist; wobei n kleiner als 6 ist; wobei R¹ und R² unabhängig H oder C₁- bis C₄-Alkyl sind; wobei, wenn n 1 ist, dann mindestens eines von R¹ und R² nicht H ist; wobei jede dieser Einheit -Z- Folgendes ist: 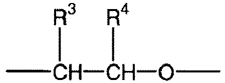
wobei, innerhalb jeder Einheit -Z-, R³ und R⁴ jeweils unabhängig Wasserstoff oder Methyl sind; wobei, innerhalb jeder Einheit -Z-, R³ und R⁴ nicht beide Methyl sind; wobei das Verhältnis des Gewichts aller Einheiten -Z- in dem Lösungsmittel, in dem sowohl R³ als auch R⁴ Wasserstoff sind, zu dem Gewicht aller Einheiten -Z- in dem Lösungsmittel, in dem eines von R³ und R⁴ Methyl ist, 0,66 : 1 oder weniger beträgt; und
wobei das Lösungsmittel einen oder mehrere Glykolether (A) beinhaltet, wobei jedes Molekül des Glykolethers (A) die Struktur (I) aufweist, wobei, unabhängig innerhalb jeder Einheit -Z-, eines von R³ und R⁴ Wasserstoff ist und das andere von R³ und R⁴ Methyl ist.

2. Zusammensetzung gemäß Anspruch 1, wobei das Lösungsmittel Folgendes beinhaltet:
(a) einen oder mehrere Glykolether (A), wobei n 2 oder mehr ist, und
(b) einen oder mehrere Glykolether (A), wobei n 1 ist.

3. Zusammensetzung gemäß Anspruch 2, wobei (b) Propylenglykol-Methylether ist.

4. Zusammensetzung gemäß Anspruch 1, wobei das Lösungsmittel zusätzlich einen oder mehrere Glykolether (B) mit der folgenden Struktur (II) beinhaltet: 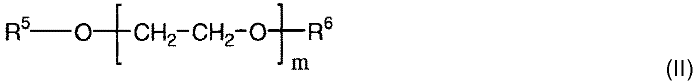
wobei m gleich oder größer als 1 ist; wobei m kleiner als 6 ist; wobei R⁵ und R⁶ unabhängig H oder C₁- bis C₄-Alkyl sind; wobei, wenn m 1 ist, dann mindestens eines von R⁵ und R⁶ nicht H ist; und
wobei das Verhältnis der Summe der Gewichte aller Glykolether (B) zu der Summe der Gewichte aller Glykolether (A) 0,66 : 1 oder weniger beträgt.

## Revendications

1. Une composition désinfectante comprenant
(a) de 15 % à 40 % de biocide, en poids, rapporté au poids de ladite composition, ledit biocide comprenant du glutaraldéhyde ;
(b) de 15 % à 40 % d'eau, en poids, rapporté au poids de ladite composition ; et
(c) de 20 % à 70 % de solvant, en poids, rapporté au poids de ladite composition ; dans laquelle ledit solvant comprend un ou plusieurs éthers de glycol ayant la structure (I) :
R¹-O-Zₙ-R² (I)
dans laquelle n est égal ou supérieur à 1 ; dans laquelle n est inférieur à 6 ; dans laquelle R¹ et R² sont indépendamment un H ou un alkyle en C₁ à C₄ ; dans laquelle, si n vaut 1, alors au moins soit R¹, soit R² n'est pas un H ; dans laquelle chaque dite unité -Z- est 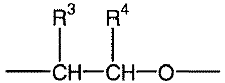
dans laquelle, au sein de chaque unité -Z-, R³ et R⁴ sont chacun indépendamment un hydrogène ou un méthyle ;
dans laquelle, au sein de chaque unité -Z-, R³ et R⁴ ne sont pas tous les deux un méthyle ;
dans laquelle le rapport du poids de toutes les unités -Z- dans ledit solvant dans lequel à la fois R³ et R⁴ sont un hydrogène au poids de toutes les unités -Z- dans ledit solvant dans lequel soit R³, soit R⁴ est un méthyle est de 0,66/1 ou moins ; et
dans laquelle ledit solvant comprend un ou plusieurs éthers de glycol (A), dans laquelle chaque molécule dudit éther de glycol (A) a ladite structure (I) dans laquelle, indépendamment au sein de chaque unité -Z-, soit R³, soit R⁴ est un hydrogène et l'autre R³ ou R⁴ est un méthyle.

2. La composition de la revendication 1, dans laquelle ledit solvant comprend
(a) un ou plusieurs éthers de glycol (A), n valant 2 ou plus, et
(b) un ou plusieurs éthers de glycol (A), n valant 1.

3. La composition de la revendication 2, dans laquelle ledit (b) est de l'éther méthylique du propylène glycol.

4. La composition de la revendication 1, dans laquelle ledit solvant comprend en plus un ou plusieurs éthers de glycol (B) ayant structure (II) : 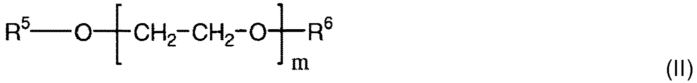
dans laquelle m est égal ou supérieur à 1 ; dans laquelle m est inférieur à 6 ; dans laquelle R⁵ et R⁶ sont indépendamment un H ou un alkyle en C₁ à C₄ ; dans laquelle, si m vaut 1, alors au moins soit R⁵, soit R⁶ n'est pas un H ; et
dans laquelle le rapport de la somme des poids de tous les éthers de glycol (B) à la somme des poids de tous les éthers de glycol (A) est de 0,66/1 ou moins.
